(19) Europäisches Patentamt
European Patent Office
Office européen des brevets

(11) **EP 2 086 046 A1**

(12) **EUROPEAN PATENT APPLICATION**

(43) Date of publication:
05.08.2009 Bulletin 2009/32

(51) Int Cl.:
*H01M 10/04* (2006.01)  *H01M 4/02* (2006.01)
*H01M 4/62* (2006.01)

(21) Application number: 09151796.1

(22) Date of filing: 30.01.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 31.01.2008 JP 2008022169

(71) Applicant: Ohara Inc.
Sagamihara-shi
Kanagawa 229-1186 (JP)

(72) Inventor: Inda, Yasushi
Kanagawa 229-1186 (JP)

(74) Representative: Jönsson, Hans-Peter
Patentanwälte von Kreisler Selting Werner
Deichmannhaus am Dom
Bahnhofsvorplatz 1
50667 Köln (DE)

(54) **Manufacture of lithium ion secondary battery**

(57) A method for manufacturing a lithium ion secondary battery which can realize strong bonds between layers and a high ion conducting property within the layers by sintering as the layers constituted of a solid electrolyte layer, a positive electrode layer, and a negative electrode layer are sintered and bonded mutually is provided. And the lithium ion secondary battery manufactured by the aforementioned method is also provided.

FIG. 1

Description

FIELD OF THE INVENTION

The present invention relates to a method for manufacturing a lithium ion secondary battery, more specifically, it relates to a method of manufacturing a laminate, which is constituted of a positive electrode green sheet, an electrolyte green sheet, and a negative electrode green sheet. It also relates to the lithium ion secondary battery manufactured by this method.

BACKGROUND ART

Recently, handheld electronic devices such as mobile phone and the like have been improved for higher performance and smaller size such that higher energy density and smaller size of batteries used in the handheld electronic devices are desired. In general, a lithium battery can provide a high voltage and achieve a high energy density so as to be expected to be utilized as the power source for such handheld electronic devices. In such lithium battery, lithium transition metal complex oxide such as lithium cobaltate ($LiCoO_2$), lithium manganate ($LiMn_2O_4$), lithium nickelate ($LiNiO_2$), etc., is generally used as a positive electrode active substance. As a negative electrode active substance, a carbon material such as graphite, fibrous carbon, and so on is used. An organic electrolyte solution is generally used in such lithium battery, and a polymer electrolyte, in which a macromolecular electrolyte and an organic electrolyte solution are mixed, is also being investigated. Since a liquid electrolyte is used in such lithium battery or polymer electrolyte battery, leakage and ignition of the liquid electrolyte can be caused such that the reliability of the battery is low. Also, since the battery performance may be drastically lowered if electrolyte solution freezes at a low temperature or vapors at a high temperature, an operating temperature range of the battery is limited. Therefore, the research and development of the lithium battery as a highly reliable battery using a solid electrolyte having a lithium ion conductive property instead of the organic electrolyte solution is being desired.

Since such a solid state battery does not use a flammable organic solvent, it is free from leakage of the solvent and fire therefrom such that excellent safety is provided. For example, Japanese patent application publication No. 2007-227362 discloses a method of manufacturing a laminate by forming an active substance green sheet and a solid electrolyte green sheet, respectively; laminating the solid electrolyte green sheet on one face of the active substance green sheet; forming a current collector green sheet layer on the other face of the active substance green sheet; heating thus-laminated body at a temperature from 200 to 400 °C in an oxidizing atmosphere; and sintering at a higher sintering temperature (for example, from 700 to 1000 °C) in a low oxygen atmosphere. Therefore, even if the current collector made of metal material is oxidized during the heating in the oxidizing atmosphere, the oxidized current collector can be reduced during the sintering at the higher sintering temperature (for example, 700 to 1000 °C) in the low oxygen atmosphere. Although addition of glass frits to a current collector slurry is referred to in Japanese patent application publication No. 2007-227362 document, no technical effects thereof are described.

Meanwhile, Japanese patent application publication No. 2007-5279 discloses a laminate comprising: an active substance layer; and a solid electrolyte layer bonded to the active substance layer by sintering. The active substance layer contains a crystalline first substance capable of adsorbing and desorbing lithium ions and the solid electrolyte layer contains a crystalline second substance having a lithium ion conducting property. Here, at least one of the active substance layer and the solid electrolyte layer contains an amorphous oxide. The amorphous oxide, for example, may comprise $SiO_2$, $Al_2O_3$, $Na_2O$, $MgO$, $CaO$, etc. Japanese patent application publication No. 2007-5279 states such amorphous oxides are added as a sintering additive such that temperatures at which sintering starts and sintering rates in various kinds of materials can be conformed to the common ones although they may differ depending on the kinds of materials.

SUMMARY OF THE INVENTION

However, while it is especially important that the electrolyte and boundaries between the electrolyte and respective electrode active substances have a high ion conducting property in such a solid state battery (lithium ion secondary battery), the amorphous oxides basically have such a low ion conducting property that it may not be easy to realize high performance of the solid state battery with the amorphous oxides. Here, in the conventional art, the amorphous oxides are expected to work as a binding material or a binding additive, not to work so much as an ion conducting material.

In consideration of the above circumstances, a method for manufacturing a lithium ion secondary battery which can realize strong bonds between layers and a high ion conducting property within the layers by sintering as the layers constituted of a solid electrolyte layer, a positive electrode layer, and a negative electrode layer are sintered and bonded mutually is provided in the present invention.

In the present invention, a manufacturing method comprising the steps of: preparing a laminate by laminating a positive electrode green sheet and a negative electrode green sheet across an electrolyte green sheet; and sintering the laminate, where at least one of the positive electrode green sheet and the negative electrode green sheet contains an oxide crystalline having a lithium ion conducting property.

Further features of the present invention, its nature, and various advantages will be more apparent from the accompanying drawings and the following description of the preferred embodiment.

**BRIEF DESCRIPTION OF THE DRAWINGS**

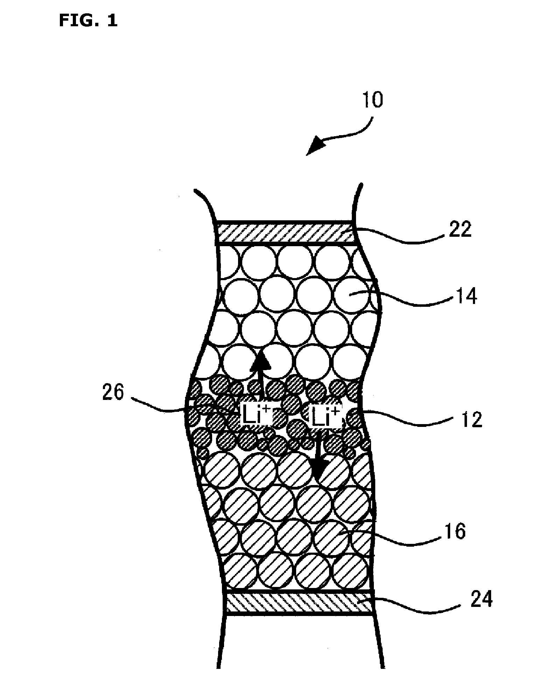

FIG. 1 is a section view of a lithium ion secondary battery according to an embodiment of the present invention.

**DESCRIPTION OF THE PREFERRED EMBODIMENT**

Although an embodiment of the present invention will be described in detail with reference to the drawings, the following description is provided to describe the embodiment of the present invention, and the present invention is not limited to the embodiment. And the same or related symbols are used to refer to the same or same kind of element and redundant description is omitted.

FIG. 1 shows a section view of a lithium ion secondary battery 10 according to an embodiment of the present invention. The lithium ion secondary battery 10 is configured such that a positive electrode 14 formed by sintering a positive electrode green sheet and a negative electrode 16 formed by sintering a negative electrode green sheet are disposed on a top face and a bottom face of an electrolyte 12 formed by sintering an electrolyte green sheet, respectively, and that the laminate of the positive electrode 14, the electrolyte 12, and the negative electrode 16 is in turn disposed between a positive electrode current collector 22 and a negative electrode current collector 24. The battery operates as lithium ions 26 inside the electrolyte 12 move to and from the positive and negative electrodes 14, 16 as indicated by arrows in FIG. 1.

[Example]

A battery as an example of a lithium ion secondary battery according to the present invention was prepared. That is, an amorphous oxide glass powder was prepared, and, using the amorphous oxide glass powder, an electrolyte green sheet, a positive electrode green sheet, and a negative electrode green sheet were prepared. The respective green sheets ware processed (e.g., cut) into an arbitrary shape and overlaid one after another to form a laminate, which was then sintered to prepare a laminated sintered body. A positive electrode current collector and a negative electrode current collector were then mounted to prepare a solid state lithium ion secondary battery. This manufacturing method will now be described in more detail.

[Preparation of amorphous oxide glass powder]

The following raw materials were used: $H_3PO_4$, $Al(PO_3)_3$, and $Li_2CO_3$, manufactured by Nippon Chemical Industrial Co., Ltd.; $SiO_2$, manufactured by Nitchitsu Co., Ltd.; and $TiO_2$, manufactured by Sakai Chemical Industry Co., Ltd. These materials were weighed to provide a composition of 35.0% $P_2O_5$, 7.0% $Al_2O_3$, 15.0% $Li_2O$, 38.0% $TiO_2$, and 4.5% $SiO_2$, respectively in mol% as the oxide, and mixed uniformly, and thereafter placed in a platinum pot and heated and melted for 3 hours while stirring at a temperature of 1500 °C in an electric furnace to obtain a glass melt. The glass melt was thereafter quenched as the melt being heated was dripped from a platinum pipe mounted on the pot into flowing water at the room temperature to obtain an oxide glass.

The oxide glass was milled by a jet mill manufactured by Kurimoto Ltd., then placed in a ball mill and subject to wet milling using ethanol as a solvent to obtain oxide glass powder having an average particle diameter of 0.5 $\mu$m and a maximum particle diameter of 1 $\mu$m. Particle size measurement was performed using a laser diffraction type particle size distribution measurement device LS100, manufactured by Beckman Coulter, Inc. Distilled water was used as a dispersant.

Here, a particle diameter (or particle size) is defined as a diameter of a sphere of equivalent sedimentation velocity in a measurement by a sedimentation method or a diameter of a sphere of equivalent diffraction characteristics by a laser diffraction method. A distribution of the particle diameters is the particle size (particle diameter) distribution. In a particle diameter distribution, an average diameter D50 (or average particle diameter D50) is defined by the particle diameter, a cumulative volume of particles having the same as or greater than which is 50 % of the entire volume the power. This is described, for example, in JISZ8901 "Test Powders and Test Particles," in Chapter 1, etc., of the Society of Powder Technology, Japan ed. "Fundamental Physical Properties of Powders," (ISBN4-526-05544-1) and other documents. In the present Specification, an integrated frequency distribution according to volume of the particle diameters was measured using laser diffraction type measuring devices (LS100 and N5, manufactured by Beckman Coulter, Inc.). A distribution by volume and a distribution by weight are equivalent. The particle diameter corresponding to 50% in the integrated (cumulative) frequency distribution was determined as the average particle diameter D50. In the present specification, the average particle diameter is based on a median value (D50) of the particle size distribution measured by the abovementioned particle size distribution measuring unit based on the laser diffraction method.

When the glass before milling was placed in an electric furnace at 1000 °C to perform crystallization and then subject to measurement of the lithium ion conductivity, the conductivity was found to be $1.3 \times 10^{-3}$ Scm$^{-1}$ at a room temperature. For measurement of the lithium ion conductivity, an impedance analyzer SI-1260, manufactured by Solartron Analytical, was used, and the conductivity was computed upon making a complex impedance measurement by an AC two terminal method. The precipitated crystalline phase was measured using a powder X-ray diffraction measurement device manufactured by Phillips Corp., and it was confirmed that the glass was a glass ceramic having $Li_{1+x+y}Al_xTi_{2-x}Si_yP_{3-y}O_{12}$ (where $0 \leq x \leq 0.4$ and $0 < y \leq 0.6$) as a main crystalline phase.

The glass ceramic crystallized as described above was milled by a jet mill and then placed in a ball mill and subject to wet milling using ethanol as a solvent to obtain a glass ceramic powder having an average particle diameter of 0.3 μm and a maximum particle diameter of 0.6 μm.

[Manufacture of electrolyte green sheet]

An electrolyte slurry was prepared using water as a solvent and dispersing and mixing the oxide glass of 0.5 μm average particle diameter with an acrylic-based binder, a dispersant, and an antifoaming agent. The slurry was decompressed to eliminate bubbles and thereafter shaped using a doctor blade and dried to prepare an electrolyte green sheet having a thickness of 30 μm. The slurry contained 10 wt% of the acrylic-based binder, 0.2-0.3 wt% of the antifoaming agent, and 0.2-0.3 wt% of the dispersant, and the rest of the oxide glass; and the content of the oxide glass contained in the electrolyte green sheet was 89.5 wt%.

[Manufacture of positive electrode green sheet]

Synthesized $LiNiO_2$ was used as a positive electrode active substance. A $LiNiO_2$ powder of 5 μm average particle diameter, the oxide glass of 0.5 μm average particle diameter, and the glass ceramic of 0.3 μm average particle diameter prepared as described above, were weighed out at proportions of 70:15:15 wt%, and dispersed and mixed with the acrylic-based binder and the dispersant using water as the solvent to prepare a positive electrode slurry. The slurry was decompressed to eliminate bubbles and thereafter shaped using a doctor blade and dried to prepare a positive electrode green sheet having a thickness of 30 μm. The content of the binder and the dispersant was 10 wt%, and the contents of the oxide glass and the glass ceramic contained in the positive electrode green sheet were 13.5 wt% each.

[Manufacture of negative electrode green sheet]

As a negative electrode active substance, $Li_4Ti_5O_{12}$, manufactured by Ishihara Sangyo Kaisha, Ltd., was used upon annealing at 500 °C. A $Li_4Ti_5O_{12}$ powder of 5 μm average particle diameter, the oxide glass of 0.5 μm average particle diameter, and the glass ceramic of 0.3 μm average particle diameter, prepared as described above, were weighed out at proportions of 70: 15: 15 wt%, and dispersed and mixed with the acrylic-based binder and the dispersant using water as the solvent to prepare a negative electrode slurry. The slurry was decompressed to eliminate bubbles and thereafter shaped using a continuous roll coater and dried to prepare a negative electrode green sheet having a thickness of 30 μm. The content of the binder and the dispersant was 10 wt%, and the contents of the oxide glass and the glass ceramic contained in the negative electrode green sheet were 13.5 wt% each.

[Manufacture of sintered laminate body]

Each of four electrolyte green sheets was disposed between a positive electrode green sheet and a negative green sheet, and each of four sets of positive electrode, electrolyte, and negative electrode green sheets is laminated one after another, and then the thus-laminated body was pressed by a heated roll press so as to be bonded between adjacent sheets, respectively. The bonded laminate body was pressed and densified at the room temperature using a CIP (cold isotropic press). The thus-prepared laminate body was clamped with a zirconia setter on the positive electrode side of the body and with another zirconia setter on the negative electrode side of the body, and then the clamped body with the setters was heated to 400 °C in an electric furnace to remove organic substance such as the binder, the dispersant, etc., from the laminate body. The temperature was thereafter raised rapidly to at 850 °C and then held thereat for 5 minutes, and, immediately thereafter, cooling was performed to prepare a laminated sintered body made from the positive electrode, electrolyte, and negative electrode green sheets.

[Manufacture of all solid state lithium ion secondary battery]

A positive electrode current collector was fixed to the positive electrode side of the laminate sintered body prepared as described above with an aluminum paste applied to the positive electrode side, which was dried and sintered. A negative electrode current collector was fixed to the negative electrode side with a copper paste printed on the negative electrode side, which was thereafter dried and sintered. An aluminum foil was connected as a positive electrode lead to the positive electrode side, a copper foil was connected as a negative electrode lead to the negative electrode side, and the laminate sintered body was sealed in an aluminum laminate film having an insulation coating interior to prepare a lithium ion battery. The prepared battery discharged at an average voltage of 2.5 V and was a rechargeable battery.

[Comparative example]

Except for adding no oxide glass or no glass ceramic to the positive electrode green sheet or the negative electrode green sheet of the above example, a laminate of a positive electrode, an electrolyte, and a negative electrode was prepared by the same procedure as described in the above example. When the laminate was sintered under the same conditions as described in the example, the electrolyte layer (from the electrolyte green sheet) and the negative electrode layer (from the negative electrode green sheet) were separated such that subsequent processes for the battery preparation could not be performed.

As described above, since the positive electrode green sheet and the negative electrode greens sheet containing oxide glass were sintered, the laminate sintered body was successfully prepared to result in the battery as described in the above example because the oxide glass acted as a binder, while the green sheet laminate without any oxide glass was not successfully sintered because separation between the sheets occurred as described in the comparable example. Furthermore, the laminate constituted of green sheets containing glass ceramics was sintered in the example such that the sintering time could be shortened.

In addition to the above description, a method for manufacturing a lithium ion secondary battery and the resulting lithium ion secondary battery can also be provided as follows.

A method of manufacturing a lithium ion secondary battery comprising: forming a laminate by laminating a positive electrode green sheet, an electrolyte green sheet, and a negative electrode green sheet; and sintering the laminate is provided. The electrolyte green sheet is disposed between the positive electrode green sheet and the negative electrode green sheet. Either or both the positive electrode green sheet and the negative electrode green sheet may contain an oxide crystalline having a lithium ion conducting property.

Here, a "green sheet" may mean an unsintered body formed in a thin plate shape with a mixed slurry having been prepared by mixing a powder of ceramics comprising unsintered glass or other inorganic oxide or a combination thereof as a main component with an organic binder, a plasticizer, a solvent, etc. The thin plate shape can be made with the mixed slurry by utilizing a doctor blade or calender method; coating methods such as spin coating and dip coating; printing method such as inkjet, bubble jet (registered trademark), offset; a die coater method; a spray method; etc. Although the green sheet is generally prepared by applying the mixed slurry onto a PET film treated with a parting agent and peeling the sheet after the slurry is dried, the slurry may be applied directly onto another green sheet or ceramic to be laminated each other, and the green sheet may also include a layer formed on the other green sheet in such a way. This unsintered green sheet is flexible and can be cut into any shape or laminated with each other.

Here, as the lithium ion conductive crystallines to be used, crystallines with a lithium ion conductive property such as LiN, LISICON, $La_{0.55}Li_{0.35}TiO_3$ having a perovskite structure, etc., which have advantages in the ion conductivity if no crystal gain boundaries are included, crystallines having NASICON type structure such as $LiTi_2P_3O_{12}$, or glass ceramics having such crystallines precipitated may be utilized. As preferable lithium ion conductive crystallines, for example, crystallines of $Li_{i+x+y}(Al, Ga)_x(Ti, Ge)_{2-x}Si_yP_{3-y}O_{12}$ (where $0\leq x\leq1$ and $0\leq y\leq1$, or more preferably $0\leq x\leq0.4$ and $0<y\leq0.6$, most preferably $0.1\leq x\leq0.3$ and $0.1<y\leq0.4$) can be used. It is more advantageous with respect to the ion conduction if the crystalline does not contain any crystal grain boundaries that inhibit ion conduction. In particular, a glass ceramic is more preferable since it has hardly any vacancies or crystal grain boundaries that inhibit the ion conduction such that it has a high ion conducting property and yet has an excellent chemical stability. Although a single crystal form of the above-mentioned crystallines can be utilized as an excellent material other than the glass ceramics that has hardly any vacancies or crystal grain boundaries that inhibit the ion conduction, it is very difficult to manufacture a single crystal such that it costs a lot. A lithium ion conducting glass ceramic has an advantage in terms of easiness of manufacture thereof as well as a low cost for manufacture thereof.

The lithium ion conducting glass ceramics may include those comprising a base glass which has a composition in the $Li_2O$-$Al_2O_3$-$TiO_2$-$SiO_2$-$P_2O_5$ system. For example, a glass ceramic having $Li_{1+x+y}Al_xTi_{2-x}Si_yP_{3-y}O_{12}$ (where $0\leq x\leq1$ and $0\leq y\leq1$) as a main crystalline phase after the heat treatment for the crystallization may be utilized. Here, it is more preferable for the main crystalline phase to have $0\leq x\leq0.4$ and $0<y\leq0.6$, and even more preferable for the main crystalline phase to have $0.1\leq x\leq0.3$ and $0.1<y\leq0.4$. The fractions of the lithium ion conducting glass ceramic and the base glass can be changed as appropriate according to the required ion conductivity, sintering conditions, etc.

Here, the glass ceramics are materials to be obtained by the heat treatment of glass such that crystalline phases are precipitated in a glass phase. The glass ceramics may include materials constituted of amorphous solid substances and crystallines. The crystalline precipitation can be detected by the X-ray diffraction method if a crystalline layer is formed after a nucleation of crystalline is generated and grows large enough. If the glass ceramics hardly have vacancies, the glass ceramics may also include material in which the entire glass phase has been changed into a crystalline phase, that is, the crystalline amount in the materials has become 100 mass% (crstallinity is 100%). In general, the so-called ceramics that are hard to melt tend to have vacancies between crystal grains or grain boundaries even after the sintering. However, the glass ceramics to be referred to here can have no residual vacancies or crystal grain boundaries since the base glass may melt. Since the ion conduction is drastically decreased by the vacancies between crystal grains and crystal grain boundaries, it is considered that the generally-called ceramics has the ion conductivity much lower than that of the crystal grains themselves. Since it is possible to prevent the decrease of the ion conductivity between crystal grains by controlling the crystallization process of the glass ceramics, the ion conductivity of the entire body can be kept as much as that of the crystal grains.

In the present invention, the electrolyte green sheet is formed into a solid electrolyte after the sintering step. However, if pores remain inside the sheet the ion conductivity of the electrolyte as a whole is lowered because the pores do not contribute as ion conducting pathways. In general, when the ion conductivity of the electrolyte is high, a transfer rate of lithium ions is high and an output of a battery manufactured using the solid electrolyte is high. The electrolyte thus preferably has a low porosity. For example, a porosity of not exceeding 20 vol% is preferable. The porosity is more preferably not exceeding 15 vol% and even more preferably not exceeding 10 vol%.

Here, the porosity is a proportion of vacancies contained in a unit volume and is expressed by the following formula:

$$\text{Porosity } (\%) = (\text{True density} - \text{Apparent density}) / \text{True density} \times 100.$$

Here, the "true density" may signify a true solid density of the material. Meanwhile, the "apparent density" is a density determined by dividing a weight of an object by an apparent volume and is a density of the object that includes the vacancies.

The "sintering step" may signify a step of treating the green sheets at a high temperature to fuse particles of inorganic substance constituting the green sheets. Preferably in the sintering step, ventilation is performed to maintain an atmosphere inside a furnace in a constant condition. Although a gas furnace, microwave furnace or other known sintering furnace may be used in the sintering step, the electric furnace is preferably used because of the ambient environment, internal temperature distribution of the furnace, cost for construction, etc.

The method for manufacturing the lithium ion secondary battery is **characterized in that** the oxide crystalline has an ion conductivity of at least $10^{-5}$ Scm$^{-1}$ at 25 °C.

During charging/discharging of a lithium ion secondary battery, a mobility of lithium ions depends on the lithium ion conductivity and a lithium ion transference number. Thus, it is preferable that a substance having a high lithium ion conducting property and a high lithium ion transference number is used in the positive electrode green sheet or the negative electrode green sheet of the present invention.

The method for manufacturing the lithium ion secondary battery as described above is **characterized in that** the oxide crystalline precipitated during the sintering has an ion conductivity of at least $10^{-5}$ Scm$^{-1}$ at 25 °C.

A powder of an active substance is contained in the positive electrode green sheet. Here, as the active substance to be used in the positive electrode green sheet, a transition metal compound capable of storing (or adsorbing) and releasing (or desorbing) Li ions may be used and, for example, a transition metal oxide, etc., containing at least one element selected from among the group consisting of manganese, cobalt, nickel, vanadium, niobium, molybdenum, titanium, iron, phosphorus, aluminum, and chromium may be used. With respect to the lower content limit of the active substance contained in the positive electrode green sheet, the content is preferably equal to or more than 40 wt%, more preferably equal to or more than 50 wt%, and most preferably equal to or more than 60 wt% since a battery capacity per unit volume after sintering decreases if the content is low. Also because plasticity is lost and handling becomes difficult if the content of the active substance contained in the positive electrode sheet is too high, the content is preferably equal to or less than 97 wt%, more preferably equal to or less than 94 wt% and most preferably equal to or less than 90 wt%.

To obtain the positive electrode green sheet with the above-mentioned content of the active substance and to prepare a slurry that can be coated satisfactorily, the amount of the positive electrode active substance with respect to the amount of the mixed slurry constituted of the positive electrode active substance powder, an inorganic powder, an organic binder, a plasticizer, a solvent, etc., is preferably equal to or more than 10 wt%, more preferably equal to or more than 15 wt%, and most preferably equal to or more than 20 wt%.

To prepare a slurry that can be coated satisfactorily, the upper content limit of the active substance with respect to the amount of the mixed slurry is preferably equal to or less than 90 wt%, more preferably equal to or less than 80 wt%, and most preferably equal to or less than 75 wt%.

In a case where an electron conducting property of the positive electrode active substance is low, the electron conducting property can be increased by adding an electron conducting additive. As the electron conducting additive, a microparticulate or fibrous carbon material or metal may be used. Metals that can be used include metals, such as titanium, nickel, chromium, iron, stainless steel, aluminum, etc., and noble metals, such as platinum, gold, rhodium, etc.

The method for manufacturing the lithium ion secondary battery as described above is **characterized in that** an amount of the oxide crystalline contained in the positive electrode green sheet is in a range of 3 wt% to 50 wt% of a weight of the positive electrode green sheet.

Here, "to a weight of the positive electrode green sheet" may signify a percentage expression of a result of dividing a weight of the oxide crystallines by the weight of an entirety of the positive electrode green sheet, including the weight of the oxide crystallines. For example, if the weight of just the oxide crystallines is 1 g, and a net weight of just the positive electrode green sheet is 9 g, the amount of the oxide crystallines with respect to the weight of the positive electrode green sheet is $1/(1+9)\times100=10$ wt%.

The lower limit of the content of the lithium ion conducting inorganic powder in the positive electrode green sheet is preferably equal to or more than 3 wt%, more preferably equal to or more than 5 wt%, and most preferably equal to or more than 10 wt% because the ion conducting property must be imparted. The upper limit of the content of the powder with respect to the amount of the mixed slurry is preferably equal to or less than 50 wt%, more preferably equal to or less than 45 wt%, and most preferably equal to or less than 40 wt% Since the amount of the active substance contained decreases and the battery capacity decreases when the content of the lithium ion conducting inorganic powder in the positive electrode green sheet becomes too high.

Meanwhile, a powder of an active substance is contained in the negative electrode green sheet in addition to the abovementioned materials. As the active substance used in the negative electrode green sheet, an alloy of aluminum, silicon, tin, etc., capable of storing (or adsorbing) and releasing (or desorbing) Li ions or a metal oxide material of titanium, vanadium, chromium, niobium, silicon, etc., may be contained.

The lower content limit of the active substance contained in the negative electrode green sheet is preferably equal to or more than 40 wt%, more preferably equal to or more than 50 wt%, and most preferably equal to or more than 60 wt% since the battery capacity per unit volume after sintering decreases if the content is low.

Also, the lower content limit of the active substance contained in the negative green sheet is preferably equal to or more than 10 wt%, more preferably equal to or more than 15 wt%, and most preferably equal to or more than 20 wt% with respect to the amount of the mixed slurry constituted of the positive electrode active substance powder, the inorganic powder, the organic binder, the plasticizer, the solvent, etc. because of the reason described above and in order to prepare the slurry that can be coated satisfactorily.

Also, the upper content limit of the active substance with respect to the amount of the mixed slurry is preferably equal to or less than 90 wt%, more preferably equal to or less than 80 wt%, and most preferably equal to or less than 75 wt% since the slurry must be prepared using the binder and the solvent.

Also, in the case where the electron conducting property of the negative electrode active substance is low, the electron conducting property can be imparted by adding an electron conducting additive. As the electron conducting additive, a microparticulate or fibrous carbon material or metal may be used. Metals that can be used include metals, such as titanium, nickel, chromium, iron, stainless steel, aluminum, etc., and noble metals, such as platinum, gold, rhodium, etc.

The method for manufacturing the lithium ion secondary battery as describe above is **characterized in that** the oxide crystalline contained in the positive electrode green sheet has a maximum particle diameter of not exceeding 3 $\mu$m.

The method for manufacturing the lithium ion secondary battery as describe above is **characterized in that** an amount of the oxide crystalline contained in the negative electrode green sheet is not exceeding 50 wt% of a weight of the negative electrode green sheet.

The lower content limit of the lithium ion conducting inorganic powder in the negative electrode green sheet is preferably equal to or more than 3 wt%, more preferably equal to or more than 5 wt%, and most preferably equal to or more than 10 wt% since an ion conducting property must be imparted. The upper content limit of the powder with respect to the amount of the mixed slurry is preferably equal to or less than 50 wt%, more preferably equal to or less than 45 wt%, and most preferably equal to or less than 40 wt% since the amount of the active substance contained decreases and the battery capacity decreases when the content of the lithium ion conducting inorganic powder in the negative electrode green sheet becomes too high.

The method for manufacturing the lithium ion secondary battery is **characterized in that** wherein the oxide crystalline contained in the negative electrode green sheet has a maximum particle diameter of not exceeding 3 $\mu$m.

In the case where large particles of the oxide crystallines are included in the electrolyte green sheet, the positive electrode green sheet, or the negative electrode green sheet, the sintering property of the large particles of the oxide crystallines is lower than that of others (smaller particles) because the sintering property depends on the size of the particles and it is believed that the crystallinity decreases as the size of the particles is large. Since large crystalline particles hinder mutual contact of smaller crystalline particles, the crystallinity decreases as a whole and a dense sintered body may not be obtained. The maximum particle size (corresponding to diameter) of the oxide crystallines that are a raw material powder is preferably, for example, equal to or less than 3 $\mu$m. The maximum particle size of the oxide crystallines that are the raw material powder for obtaining a dense sintered body is preferably equal to or less than 2 $\mu$m and more preferably equal to or less than 1 $\mu$m.

The method for manufacturing the lithium ion secondary battery as described above is **characterized in that** the electrolyte green sheet contains an amorphous oxide glass powder in which a lithium ion conducting oxide crystalline precipitated during the sintering.

The method for manufacturing the lithium ion secondary battery as described above is **characterized in that** an amount of the oxide glass powder contained in the electrolyte green sheet is in a range of 60 to 100 wt%.

Since a higher ion conductivity is obtained when more of the above-described oxide glass expressing the lithium ion conducting property after sintering is contained in the electrolyte green sheet, it is preferable that the electrolyte green sheet contains at least 60 wt% of the oxide glass. The electrolyte green sheet more preferably contains at least 65 wt% and even more preferably at least 70 wt%. In regard to the upper limit, there is no upper limit and even 100 wt% is allowable as long as a solid electrolyte can be maintained in a dense form after sintering of the electrolyte green sheet. In the case where the content is 100 wt%, for example, a slurry constituted solely of a solvent and the oxide glass powder may be applied directly onto the green sheet, etc., by a coating method such as dip coating; a printing method such as an inkjet, bubble jet (registered trademark), offset; a die coater method, a spray method, etc. such that the electrolyte green sheet is to be laminated.

The method for manufacturing the lithium ion secondary battery as described above is **characterized in that** the oxide glass powder contained in the electrolyte green sheet has a maximum particle diameter of not exceeding 5 $\mu$m.

In order to increase a filling factor, the maximum particle diameter of the oxide glass inorganic powder expressing the lithium ion conducting property after sintering is preferably equal to or less than 5$\mu$ m, more preferably equal to or less than 3 $\mu$m, and most preferably equal to or less than 1 $\mu$m. Because if the powder is too fine, aggregation occurs readily and uniform dispersion becomes difficult, the lower limit of the maximum particle diameter of the lithium ion conducting inorganic powder is preferably equal to or more than 0.01 $\mu$m, more preferably equal to or more than 0.05 $\mu$m, and most preferably equal to or more than 0.1 $\mu$m.

The method for manufacturing the lithium ion secondary battery as described above is **characterized in that** the positive electrode green sheet contains an amorphous oxide glass powder in which a lithium ion conducting oxide crystalline precipitated in the sintering.

The method for manufacturing the lithium ion secondary battery as described above is **characterized in that** the positive electrode green sheet is formed in a pattern on the electrolyte green sheet in the forming.

The method for manufacturing the lithium ion secondary battery as described above is **characterized in that** the negative electrode green sheet is formed in a pattern on the electrolyte green sheet in the forming.

Here, when the positive electrode green sheet or the negative electrode green sheet is formed in a pattern, a battery having the shape matched with the pattern can be manufactured readily by cutting the laminate of the green sheets. For example, when a laminate is prepared in which the positive electrode green sheet and the negative electrode green sheet are attached intermittently in matched pitch onto the electrolyte green sheet that extends continuously in one direction, a laminate of a predetermined size can be taken out by cutting at portions at which the positive electrode green sheet and the negative electrode green sheet are cut (interrupted portions). By sintering this laminate under predetermined conditions, a battery of that size can be prepared.

The method for manufacturing the lithium ion secondary battery as described above is **characterized in that** the negative electrode green sheet contains an amorphous oxide glass powder in which a lithium ion conducting oxide crystalline precipitated in the sintering.

The method for manufacturing the lithium ion secondary battery as described above is **characterized in that** the oxide crystalline comprises $Li_{1+x+y}Al_xTi_{2-x}Si_yP_{3-y}O_{12}$ (where $0 \leq x \leq 0.4$ and $0 < y \leq 0.6$).

The method for manufacturing the lithium ion secondary battery as described above is **characterized in that** the oxide glass powder contains:

10 to 25 mol% of $Li_2O$,
0.5 to 15 mol% of $Al_2O_3$ and/or $Ga_2O_3$,
25 to 50 mol% of $TiO_2$ and/or $GeO_2$,
0 to 15 mol% of $SiO_2$, and

26 to 40 mol% of $P_2O_5$,

where each amount is in mol% based on the oxide as a unit compound (hereinafter the same in the following).

The $Li_2O$ component is an essential component that provides $Li^+$ ion carriers and realizes a lithium ion conductive property. To obtain a good conductivity, the lower content limit of the $Li_2O$ component is preferably 10 mol%, more preferably 11 mol%, and even more preferably 12%. The upper content limit of the $Li_2O$ component is preferably 25 mol%, more preferably 24 mol%, and even more preferably 23 mol% since too much $Li_2O$ component may cause degradation of the thermal stability of the glass.

The $Al_2O_3$ and/or $Ga_2O_3$ component can increase the thermal stability of the base glass, and at the same time, $Al^{3+}$ ions and/or $Ga^{3+}$ ions can undergo solid solution in the crystalline phase to improve the lithium ion conductivity. To realize such effects, the lower content limit of the $Al_2O_3$ and/or $Ga_2O_3$ component is preferably 0.5 mol%, more preferably 1.0 mol%, and most preferably 1.5 mol%. Since the thermal stability of glass could rather degrade and the ion conductivity of the glass ceramic could also decrease if the content of the $Al_2O_3$ and/or $Ga_2O_3$ component exceeds 15 mol%, the upper content limit is preferably 15 mol%. And the upper content limit is more preferably 14 mol% and most preferably 13 mol%.

The $TiO_2$ and/or $GeO_2$ component contributes to glass formation and constitutes the crystalline phase as a component so as to be a useful component in both the glass and crystalline phases. In order to obtain a high ion conductivity of the glass ceramic by precipitating the crystalline phase as a main phase from the glass phase, the lower content limit thereof is preferably 25 mol%, more preferably 26 mol%, and most preferably 27 mol%. The upper content limit is preferably 50 mol%, more preferably 49 mol%, and most preferably 48 mol% since too much of the $TiO_2$ and/or $GeO_2$ component may cause degradation in the thermal stability and decrease of the conductivity of the glass ceramics.

The $SiO_2$ component can improve a melting property and the thermal stability of the base glass and at the same time, $Si^{4+}$ ions undergo solid dissolution in the crystalline phase to improve a lithium ion conductivity. To achieve this effect adequately, the lower content limit is preferably 0 mol%, more preferably 1 mol%, and most preferably 2 mol%. However, because the conductivity could rather decrease readily if the content exceeds 15 mol%, the upper content limit is preferably 15 mol%, more preferably set to 14 mol%, and most preferably set to 13 mol%.

The $P_2O_5$ component is an essential component for glass formation and is also a component of the crystalline phase. Because vitrification becomes difficult when the content is less than 26 mol%, the lower content limit is preferably 26 mol%, more preferably 27 mol%, and most preferably 28 mol%. However, because it becomes difficult for the crystalline phase to precipitate from the glass such that desired characteristics may not be obtained if the content exceeds 40%, the upper content limit is preferably 40 mol%, more preferably 39 mol%, and most preferably 38 mol%.

With the above-described compositions, it is possible to obtain glass easily by casting molten glass, and a glass ceramic having the above-described crystalline phase obtained by heat treatment of the glass has a high lithium ion conducting property. Besides the above-described composition, as long as the glass ceramic has a similar crystal structure, a portion or all of the $Al_2O_3$ may be replaced by $Ga_2O_3$ and a portion or all of the $TiO_2$ may be replaced by $GeO_2$. Furthermore, to lower a melting point of the glass ceramic or improve the stability of glass in manufacturing the glass ceramic, other raw materials may be added within a range in which the ion conducting property is not largely degraded.

It is preferable that the glass ceramic composition contains no other alkali metal like $Na_2O$ or $K_2O$ than $Li_2O$ if it is possible. When any of these components are present, conduction of Li ions may be inhibited and the ion conductivity may be decreased by an alkali ion mixing effect. Since the chemical durability and stability of the glass ceramic degrade although improvement of the lithium ion conducting property can be anticipated if sulfur is added to the glass ceramic composition, it is preferable that the glass ceramic composition contains no sulfur if it is possible. It is preferable that the glass ceramic composition contains none of Pb, As, Cd, Hg, or other components that may be harmful to the environment or the human body if it is possible.

A lithium ion secondary battery manufactured by the method as recited above can be provided.

Although the oxide glass can be crystallized and can have a high ion conductivity by a heat treatment, this may also lead to inhibition by a side reaction with an active substance of an electrode. By mixing crystalline glass having a high ion conductivity in advance, the ion conductivity can be improved and side reactions with active substances of the electrodes can be suppressed. By adjusting by increasing a contained proportion of the crystalline glass having ion conductivity, etc., a sintering time of the laminate can be shortened.

**Claims**

**1.** A method of manufacturing a lithium ion secondary battery comprising the steps of:

forming a laminate by laminating a positive electrode green sheet, an electrolyte green sheet, and a negative electrode green sheet; and

sintering the laminate,

wherein at least one of the positive electrode green sheet and the negative electrode green sheet contains an oxide crystalline having a lithium ion conducting property.

2. The method according to claim 1 wherein the oxide crystalline has an ion conductivity of at least $10^{-5}$ Scm$^{-1}$ at 25 °C.

3. The method according to claim 1 or 2 wherein the oxide crystalline precipitated during the sintering has an ion conductivity of at least $10^{-5}$ Scm$^{-1}$ at 25 °C.

4. The method according to any one of claims 1 to 3 wherein an amount of the oxide crystalline contained in the positive electrode green sheet is in a range of 3 wt% to 50 wt% of a weight of the positive electrode green sheet.

5. The method according to any one of claims 1 to 4 wherein the oxide crystalline contained in the positive electrode green sheet has a maximum particle diameter of not exceeding 3 $\mu$m.

6. The method according to any one of claims 1 to 5 wherein an amount of the oxide crystalline contained in the negative electrode green sheet is not exceeding 50 wt% of a weight of the negative electrode green sheet.

7. The method according to any one of claims 1 to 6 wherein the oxide crystalline contained in the negative electrode green sheet has a maximum particle diameter of not exceeding 3 $\mu$m.

8. The method according to any one of claims 1 to 7 wherein the electrolyte green sheet contains an amorphous oxide glass powder in which a lithium ion conducting oxide crystalline precipitated during the sintering.

9. The method according to any one of claims 1 to 8 wherein an amount of the oxide glass powder contained in the electrolyte green sheet is in a range of 60 to 100 wt%.

10. The method according to any one of claims 1 to 9 wherein the oxide glass powder contained in the electrolyte green sheet has a maximum particle diameter of not exceeding 5 $\mu$m.

11. The method according to any one of claims 1 to 10 wherein the positive electrode green sheet contains an amorphous oxide glass powder in which a lithium ion conducting oxide crystalline precipitated in the sintering.

12. The method according to any one of claims 1 to 11 herein the negative electrode green sheet contains an amorphous oxide glass powder in which a lithium ion conducting oxide crystalline precipitated in the sintering.

13. The method according to any one of claims 1 to 12 wherein the oxide crystalline comprises $Li_{1+x+y}Al_xTi_{2-x}Si_yP_{3-y}O_{12}$ (where $0{\leq}x{\leq}0.4$ and $0{<}y{\leq}0.6$).

14. The method according to any one of claims 1 to 13 wherein the oxide glass powder contains:

10 to 25 mol% of $Li_2O$,

0.5 to 15 mol% of $Al_2O_3$ and/or $Ga_2O_3$,

25 to 50 mol% of $TiO_2$ and/or $GeO_2$,

0 to 15 mol% of $SiO_2$, and

26 to 40 mol% of $P_2O_5$.

15. A lithium ion secondary battery manufactured by the method as recited in any one of claims 1 to 14.

**FIG. 1**

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/042265 A1 (TAMAI HIDEKAZU [JP] ET AL) 22 February 2007 (2007-02-22) | 1,15 | INV. H01M10/04 |
| Y | * paragraphs [0028], [0029], [0032] - [0037] * | 2,3,8-12 | H01M4/02 H01M4/62 |
| Y | EP 1 424 743 A (OHARA KK [JP]) 2 June 2004 (2004-06-02) * abstract * * paragraphs [0020], [0025] - [0028], [0032]; example 1 * | 2,3,8, 10-12 | |
| Y | EP 1 775 789 A (OHARA KK [JP]) 18 April 2007 (2007-04-18) * paragraphs [0049] - [0053] * | 9 | |
| A | * paragraph [0058] * | 13,14 | |
| A | US 2007/259271 A1 (NANNO TETSUO [JP] ET AL) 8 November 2007 (2007-11-08) * abstract * * paragraphs [0028], [0031], [0032], [0040], [0054], [0055], [0057], [0058], [0063] * | 1-15 | |
| A | EP 1 760 819 A (OHARA KK [JP]) 7 March 2007 (2007-03-07) * abstract * * paragraphs [0029] - [0031], [0046], [0053] * | 1-15 | |

TECHNICAL FIELDS
SEARCHED (IPC)

H01M

The present search report has been drawn up for all claims

| Place of search | Date of completion of the search | Examiner |
|---|---|---|
| The Hague | 29 May 2009 | Pipoli, Tiziana |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 15 1796

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2009

| Patent document cited in search report | | Publication date | Patent family member(s) | | Publication date |
|---|---|---|---|---|---|
| US 2007042265 | A1 | 22-02-2007 | NONE | | |
| EP 1424743 | A | 02-06-2004 | AT | 346392 T | 15-12-2006 |
| | | | CA | 2451181 A1 | 29-05-2004 |
| | | | CN | 1505198 A | 16-06-2004 |
| | | | DE | 60309815 T2 | 11-10-2007 |
| | | | JP | 2004185862 A | 02-07-2004 |
| | | | KR | 20040047664 A | 05-06-2004 |
| | | | TW | 265652 B | 01-11-2006 |
| | | | US | 2006234130 A1 | 19-10-2006 |
| | | | US | 2004106046 A1 | 03-06-2004 |
| EP 1775789 | A | 18-04-2007 | JP | 2007134305 A | 31-05-2007 |
| | | | KR | 20070041358 A | 18-04-2007 |
| | | | KR | 20080044218 A | 20-05-2008 |
| US 2007259271 | A1 | 08-11-2007 | WO | 2006064774 A1 | 22-06-2006 |
| | | | KR | 20070069200 A | 02-07-2007 |
| | | | KR | 20080099350 A | 12-11-2008 |
| EP 1760819 | A | 07-03-2007 | CN | 1925203 A | 07-03-2007 |
| | | | JP | 2007066703 A | 15-03-2007 |
| | | | KR | 20070026159 A | 08-03-2007 |
| | | | KR | 20080044217 A | 20-05-2008 |
| | | | US | 2007048617 A1 | 01-03-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007227362 A

- JP 2007005279 A